# EUROPEAN PATENT APPLICATION

(11) **EP 1 298 931 A2**
(43) Date of publication of application: **02.04.2003**
(21) Application number: 02396145.1
(22) Date of filing: 20.09.2002
(51) Int. Cl.: H04N 7/24

(54) **Adaptive media stream**

(30) Priority: 20.09.2001 FI 20011856
(71) Applicant: Oplayo Oy, 00180 Helsinki (FI)
(72) Inventor: Ala-Honkola, Pekka, 00180 Helsinki (FI)
(74) Representative: Savela, Antti-Jussi

(57) **Abstract**

This invention relates to media streams transmitted in a network, such as the Internet. The idea is to change the source of the content of a media stream when an available transmission speed rate changes. Each source contains essentially the same information (such as video and voice), but the suitability of each source for transmission has been adjusted to a certain speed rate.

## Description

### FIELD OF THE INVENTION

This invention relates to media streams transmitted in a network, such as the Internet. Especially, the invention relates to media streams concerning video pictures and voice.

### BACKGROUND OF THE INVENTION

When media streams that contain continuous data, for example video pictures and voice, are transmitted in a network, such as the Internet, the speeds of the media streams have to be adjusted with the speed of the transmission connection available at the time. Often, in the case of video pictures, the adjustment is made by changing the visual quality of the pictures. The speed of a transmission connection in the Internet depends strongly on a user's Internet terminal. Some terminals support technically higher speed rates than others (usually older terminals). Thus, speed adjusted media streams must be offered for a variety of terminals.

Transmission speed may also vary with time. For example, when congestion happens in the network, the transmission speed may decrease considerably. After the congestion, the transmission speed returns to the normal speed rate.

Nowadays, most of the content of the Internet is in WWW servers, which use the HTTP protocol for transmitting desired contents to users. Originally, the HTTP protocol was not designed for continuous media streams (video, voice). The problem of the known solutions is that when a media stream has to be adjusted for a changed transmission condition, i.e. to be an adaptive media stream, a special software or protocol must be used, instead of the HTTP protocol. Real Server® (RealNetworks Inc, Seattle, Washington), Quicktime® Server (Apple Computers, Cupertino California), and Windows Media Server® (Microsoft, Redmond, Washington) are commercial server software, which support adaptive media streams. These software packages use special protocols, such as RTP (Real-Time Transport Protocol) and RTSP (Real Time Streaming Protocol), which are designed for the adaptive media streams.

However, using these software packages usually requires a user to invest and maintain parallel devices and software in addition to the WWW server that is used to serve other Internet content, such as web pages. User communities such as corporations require support staff which must be educated to use these systems. For a service provider this means in practice that a special media stream server must be maintained. The goal of this invention is to eliminate these drawbacks. This is achieved in a way described in the claims.

### SUMMARY OF THE INVENTION

The following definitions should be kept in mind when reading these specifications:
Connection: A transport layer virtual circuit established between two programs for the purpose of communication. A connection can have varying transmission speed rates.
HTTP transport: An application layer transmission of data from a file on a server computer to a user terminal using HTTP 1.1 protocol. One HTTP 1.1 connection can consist of one or several HTTP 1.1 transports.
Stream: A continuous transmission of data over for example HTTP transport

An important aspect of the invention is to change the source of an adaptive media stream when an available connection speed rate changes. Each source contains essentially the same information (such as video and voice), but the suitability of each source for transmission has been adjusted to a certain connection speed rate. The coding of the source information can be different among the sources, which affects the speed rate. The picture information can be black-and-white instead of a color picture. The picture size can be smaller or larger. The video can be with or without voice. When the source is changed, also a new HTTP transmission for the new source is started for a new stream containing the information of the new source. In other words, the adaptive media stream, i.e. the adaptive stream, comprises at least one media stream for transmitting information.

In an arrangement according to the invention a source file is formed. The source file contains a plurality of sources intended for different media streams, according to such parameters as bandwidth, computing capability of the receiving terminal, etc. At the beginning of the transmission the optimal transmission speed rate at the time is chosen according to an information transfer condition. The source in the source file, which corresponds to the available speed rate, is selected to be the source of the adaptive media stream. When the available transmission speed rate changes, either to be faster or slower, a command for changing the source of the adaptive media stream, is sent from the user's terminal to the service provider's server, i.e. the source server, wherein the file of the service is. Preferably commands are sent using an HTTP protocol. When the available transmission speed rate changes again, a new command for changing the source is sent from the user's terminal to the source server. The commands are sent when it is possible to use a higher speed rate or when a lower speed rate must be used.

In one aspect, the invention thus provides a method for providing an adaptive media stream between a sending terminal and a user's terminal wherein the adaptive media stream comprises at least one media stream and the method comprises the steps of choosing a transmission speed rate for the media stream, selecting a suitable data source for the media stream among sources containing essentially the same information content, each source intended for a certain information transfer condition and playing the media stream. During such playing, checking the suitability of the actual transmission speed rate, and continuing playing the media stream if the transmission speed is still suitable or selecting a new data source, which is suitable at the moment as a response for the selection of the new data source, playing a new media stream. Those selection actions continue until the played stream stops.

Optionally, the step of choosing comprises the phase of reading a header field of a file, which contains at least two data sources, the header indicating the starting points of the sources and to which transmission speed rate each source is indented. Yet another option calls for the selecting step to include the phase of starting to read from the starting point of the selected source.

Other aspect of the invention provide for the step of monitoring to include the phase of monitoring a filling degree of a buffer for incoming data in the user's terminal, e.g. if the buffer is becoming empty or full, then selecting to continue to play the present media stream or to start playing another media stream. The information of the selection of the new data source may transmitted from the user's terminal to the sending terminal using a GET method of an HTTP protocol with an optional RANGE field. When a new stream is played, an optional phases of terminating the old media stream after starting to play the new media stream and creating the new media stream before playing the new media stream is also contemplated.

If a new stream is selected, according to another aspect of the invention, the step of reading timing marks in said adaptive media stream for defining the right point to start playing the new media stream is also performed. Further, the step of selecting the initial speed may comprise the phase of reading a header field of files, where each contains one data source, the header indicating the starting points of the source and to which transmission speed rate the source is indented.

An arrangement for providing an adaptive media stream between a sending terminal and a user's terminal, is also contemplated, wherein the adaptive media stream comprises at least one media stream and the arrangement comprises:
a) Means in the client terminal for choosing a transmission speed rate for the media stream,
b) A data structure in the sending terminal comprising at least two data sources containing essentially the same information, each source intended for a certain transmission speed rate,
c) Means in the client terminal and the sending terminal for selecting a suitable data source from among the sources for the media stream,
d) Means in the user's terminal for checking the suitability of the transmission speed rate when the media stream is played,
e) Means in the user's terminal for reselecting a suitable data source from among the sources for a new media stream.

An arrangement as described above may further comprise means for playing the data structure in a way that the playing is started from the right point of the data structure. Preferably, means a) comprises means for reading a message from the user's terminal, which defines alternative transmission speed rates. Further preferably, each source comprises timing marks, which indicate the corresponding point in the other sources. More preferably, the arrangement further comprises a GET method of an HTTP protocol with an optional RANGE field for transmitting the information of the reselection of the suitable data source from the user's terminal to the sending terminal. In another preferable embodiment, means d) comprises means for monitoring a filling degree of a buffer for incoming data in the user's terminal. It also preferable that the data structure is a file containing the data sources. Alternatively, the data structure may be a number of files, each of them containing one data source.

Means c) may further comprise means for reading a header of the data structure, which indicates the starting points of the sources and to which transmission speed rate each source is intended. Means c) may further comprise means for reading headers of the files, which indicate the starting point of the source and to which transmission speed rate the source is intended.

In yet another aspect, the invention teaches a method for storing adaptive media stream data comprising the steps of storing a plurality of media streams, each representing a substantially similar information content, and each adapted for a different set of information transfer conditions; and providing a plurality of pointers into a first of said media streams, said pointers associated with a source location in one of said media streams and pointing to at least one target location in a second of said media streams; wherein the information content of said target location is substantially a continuation of the information content prior to said source location.

Preferably, said plurality of media streams is contained in a single file. Said pointers are preferably embedded within said adaptive media stream data, and comprise target locations pointer comprises a byte offset into said single file. Alternatively, said target location pointer comprises an offset into said second source stream, within said single file. Another alternative teaches that said target locations pointers comprise a pointer to another file containing said second media stream or a portion thereof. Optionally in this case, said target location pointer further comprises a byte offset into said other file.

### BRIEF DESCRIPTION OF THE DRAWINGS

In the following the invention is described in more detail by means of Figs. **1 - 3** in the attached drawings where.
- FIG. **1**: illustrates an example of the structure of a file according to the invention,
- FIG. **2**: illustrates an example of a flow chart describing the function of the inventive arrangement,
- FIG. **3**: illustrates an example of an arrangement according to the invention.

### DETAILED DESCRIPTION OF THE INVENTION

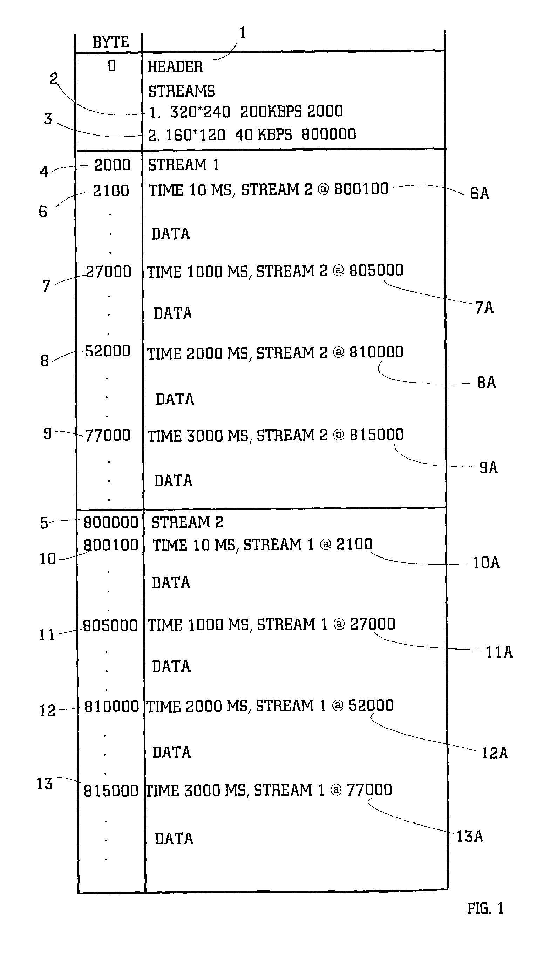

FIG. **1** describes an example of a file structure according to the invention. The file is in the service provider's server (source server) from where users can stream it. For example the file contains a video in two different formats. At the beginning of the file there exists a header **1**, which contains starting bytes for two different media sources - the sources for the media stream. Source 1, called stream 1 contains video data in a resolution of 320*240, for a speed rate 200 kbps (kilobit per second) **2.** The starting byte **4** for that video data is byte 2000 in the file. Source 2, called stream 2 contains video data in a resolution of 160*120 optimized for a speed rate 40 kbps **3.** The starting byte of that video data **5** in the file is at byte 800000. If the network and a user's terminal support the transmission speed rate 200 kbps then stream 1 is sent to the user - otherwise stream 2 is sent. In this embodiment, all data feeds are assumed to support communication at a speed of at least 40 kbps. It should be noted that stream 1 and 2 are sources i.e. the parts of the file structures in this example, and a media stream is a continuous transmission of data of a source over a transmission protocol. The transmission protocol used can be any protocol, in this text the HTTP protocol is used.

Stream 1 is sent, i.e. streamed, to the user. Stream 1 (and the media stream for it as well) contains timing marks **6, 7, 8, 9.** The timing marks are embedded in stream 1 at a various locations, and correlate the information in the two separate resolution streams. Thus the timing marks of stream 1 in the example of Fig. 1 indicate the byte of the file where the stream is running at the time and the corresponding byte **6A, 7A, 8A, 9A,** in stream 2. If for some reason, the network can not transmit stream 1 with 200 kbps, or the user's terminal can not receive at this speed rate, the transmission of the video is changed to stream 2. For example, when the need to change the speed rate to a lower one is noticed and the most recently received (or alternatively the next) timing mark is, let's say, the mark **7** indicating time 1000 ms, it tells the corresponding byte 805000 in stream 2 to where the source of the transmission of the video transfers **11.**

Similarly, stream 2 (and the media stream for it) contains timing marks **10**, **11**, **12**, **13**, which point to the location of corresponding information in stream 1, as shown by the corresponding byte **10A, 11A**, **12A**, **13A**, in stream 1. When the capability of transmitting 200 kbps is noticed during the transmission at 40 kbps rate, the transmission of the video is changed to stream 1. For example, when the availability of the higher speed rate is noticed and the next timing mark is the mark **13** indicating time 3000 ms, the corresponding byte 77000, located in stream 1, points to the location of corresponding information in stream 1 so the source of transmission is shifted to stream 1, using data stored in location **9** onwards.

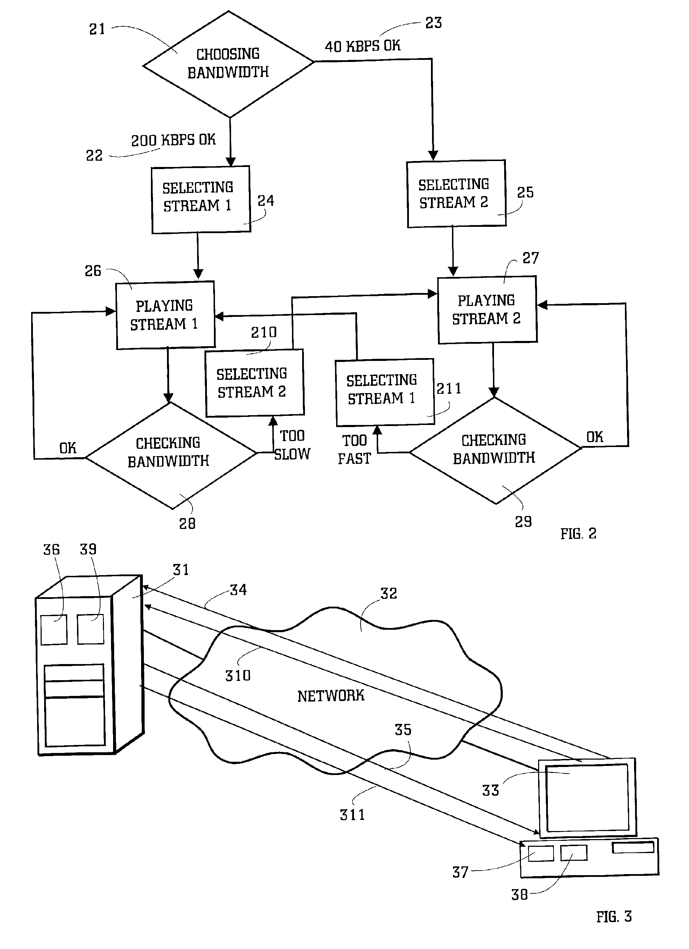

FIG. **2** shows an example of a flow chart, which illustrates a function and method of the invention. FIG. **3** shows an example of the inventive arrangement. When a user visits a home page of a service provider, he/she may find something he wants to order, such as a video show. The video player client running in the user terminal sends **34** a request message from the terminal **33** to the service provider's server **31** through the network **32**, such as the Internet, to get the show using a GET method, which is one of the methods defined in the HTTP1.1 protocol. Let the request be:
GET http://www.serviceprovider.com/video/music/song1.video. **HTTP/1.1**

Often, the connection speed rate depends on the available (and optional) connection and processing speeds of the terminal. At the beginning, the first stream which is sent works like a test stream. The test stream, i.e. the first stream preferably forms the first part of the file structure, which preferably contains data for the lowest bandwidth. Thus the first stream over the HTTP transport also contains a list of alternative speed rates. The player in the client terminal chooses **21** one of the supported speed rate from the list. (It should be noted that the server can be informed of the capability of a terminal or the available bandwidth using other techniques and the specific method of learning the link capabilities is a matter of technical choice to one skilled in the art.) In this example, the user's terminal supports speed rates of 200 kbps and 40 kbps. Let's assume that the desired file **36** is the file in FIG. **1**. If the speed rate of 200 kbps **22** is available, stream 1 is selected **24**. Otherwise, the speed rate of 40 kbps **23** is chosen and stream 2 is selected **25.** (Notice that the higher speed rate means the higher bandwidth.)

In the selection of the speed rate of 200 kbps the server starts to play **26** stream 1 beginning at byte (2000) of the file. The data and the timing marks are sent **35** to the user's terminal during the play. The terminal checks **28** frequently that the currently available bandwidth is sufficient for the selected stream. If the bandwidth is sufficient, playing stream 1 is continued. If the bandwidth becomes unavailable for stream 1, stream 2 is selected **210** and stream 2 starts to play **27, 311** beginning at the byte of the file defined by the latest timing mark. The bandwidth of stream 2 is checked **29** similarly as the bandwidth of stream 1, and when the bandwidth is again available for the speed rate of 200 kbps, stream 1 is selected **211**.

In the selection of the speed rate of 40 kbps the server starts to play **25** stream 2 from the right byte (800000) of the file. The data and the timing marks are sent **35** to the user's terminal during the play. The terminal checks **29** frequently that the bandwidth is okay for the selected stream. If the bandwidth is still restricted to 40 kbps, playing stream 2 is continued. If the bandwidth rise to a level sufficient to support 200 kbps transmission, stream 1 is selected **211** and stream 1 starts to play **26**, and is sent **311** to the terminal **33** beginning at the byte of the file defined by the latest timing mark. The bandwidth of stream 1 is checked **28** similarly as the bandwidth of stream 2, and when the bandwidth is again too slow for the speed rate of 200 kbps, stream 2 is selected **210**.

The checking of the bandwidth of the streams can be made, for example, measuring a filling degree of a buffer for incoming data connection in the user's terminal. When the buffer is becoming empty, the required bandwidth for current stream is too high compared to what is available through the network connection, and the speed rate should be dropped. When the buffer is becoming full, bandwidth for current stream is lower than what is available through the network connection, and the speed rate can be raised. After the measurement, the suitable stream source is selected **210, 211** and a GET command with an additional field RANGE is sent **310** from the user's terminal to the server for changing the stream. For example, let the GET command be GET http://www.serviceprovider.com/video/music/song3video RANGE: bytes= 805000- when the transmission speed rate changes from 200 kbps to 40 kbps.

It is worth noting that preferably, when a stream is changed, a new HTTP transport (and naturally a new media stream) is started and the old media stream is terminated after the new media stream starts playing. From the view of the user the desired file, such as a video show, seems to continue without any break because the new stream starts playing from the byte indicated by the timing mark, thus the information continuity is maintained, despite the media stream switch. So, when the source is changed, also a new HTTP transport is created for the new stream, i.e. media stream, instance and for the new source. Thus the adaptive media stream, i.e. the adaptive stream, is made up of one media stream or several consecutive media streams. Since the consecutive media streams carry essentially the same data, a user gets a visual impression of continuous shows. In other words, the adaptive media stream comprises at least one media stream for transmitting information. The HTTP 1.1 protocol provides a feature called Persistent Connections. Persistent Connection means that several requests (such as GET), can be sent via one TCP connection. Thus one connection may carry several consecutive streams. However, it should be noted that several TCP connections may be needed or used for transmitting consecutive streams.

Furthermore, it may be said that the adaptive media stream comprises several (or one if the speed rate remains the same during the whole transmission) instances (separate streams) of the same object (the adaptive media stream containing information such as video). Naturally, there are more ways to model the adaptive media stream, but common for these models are that transmission of information of the adaptive stream, (the stream of a continuous data, such as video over one or several connections) happens in one or several consecutive media streams over a transport protocol, each media stream adapted for certain conditions, and certain links or pointers periodically connect or cross connect the media streams in essentially content coherent fashion. Thus varying transmission conditions may dictate how many suitable media streams are sent forming together the adaptive stream.

For creating the inventive arrangement an initial selection module **39** (i.e. means) for choosing an original transmission speed rate and selecting a suitable source in a service provider's server is needed. In a user's terminal another estimation module **37** (i.e. means for checking transmission rate) is needed, for checking the suitability of the transmission speed rate as reselection module **38** (i.e. means) for reselecting a suitable source are needed.

Although, the processing and network connection speed of a user's terminal is mostly the decisive element when selecting a suitable transmission speed rate, it may happen that the network itself becomes congested. In congestion, the available speed rate decreases and the transmission speed rate must be lowered. On the other hand, if the network allows a higher speed, the transmission speed rate may be increased.

Using the inventive arrangement, an adaptive media stream can be served from with a common HTTP server. Therefore, there is no need for the use of a special media stream server, or parallel devices and software. Remarkable cost savings are achieved, since usually service providers and users support the HTTP protocol. Also the reliability of the system increases because of fewer sources of faults.

It is clear that inventive arrangement can be implemented in many ways. For example, the time period between two timing marks can be different than in the example of this text. It can be any suitable period depending on the features of a solution, such as 2 or 4 seconds. The format of the inventive file can be any suitable format as well, such as MPEG or another.

The inventive file may comprise more than two different streams (containing the same content), from which the most suitable stream is selected at any given time. Therefore, timing marks must contain a number of references for the corresponding byte in the other data sources.

All the sources do not have to be in the same file, but each source can be a separate file. However, the use of this kind of structure is not as efficient when attempting to use as little processing power as possible compared to the use of one file structure. In the structure of several files, timing marks must indicate the right file with the corresponding byte.

Although, a sending terminal have been described to be a server in the examples above, it is clear that the sending terminal can be another terminal capable of sending information.

Similarly other mechanisms are known and suitable to measure and select the most appropriate source. Such methods may be server based or user terminal based, or even utilize intermediate network nodes to estimate network congestion and bandwidth, and similar measurements that are indicative of total node to node capacity, as well as specific node capabilities, and the selection of sources (and media streams) may be carried out in various ways that will provide the best end-user experience according to varying conditions.

According to the above-mentioned matters, it is evident that the invention is not restricted to the solutions described in this text, but it can be modified for various solutions, in the scope of the inventive idea.

## Claims

1. A method for providing an adaptive media stream between a sending terminal and a user's terminal **characterized in that** the adaptive media stream comprises at least one media stream and the method comprises the steps of:
a) choosing a transmission speed rate for the media stream,
b) selecting a suitable data source for the media stream among sources containing essentially the same information, each source intended for a certain transmission speed rate,
c) playing the media stream,
d) checking the suitability of the transmission speed rate,
e) either continuing playing the media stream if the transmission speed is still suitable or,
f) selecting a new data source, which is suitable at the moment,
g) as a response for the selection of the new data source, playing a new media stream,
h) repeating steps d) to g) until the stream, which is played, stops.

2. A method according to claim 1 **characterized in that** step b) comprises the phase of reading a header field of a file, which contains at least two data sources, the header indicating the starting points of the sources and to which transmission speed rate each source is intended.

3. A method according to claim 2 **characterized in that** step c) comprises the phase of starting to read from the starting point of the selected source.

4. A method according to claim 1 or 3 **characterized in that** step d) comprises the phase of monitoring a filling degree of a buffer for incoming data in the user's terminal.

5. A method according to claim 4 **characterized in that** if the buffer is becoming empty or full, then step f) is chosen, else step e) is chosen.

6. A method according to claim 1 or 5 **characterized in that** the information of the selection of the new data source is transmitted from the user's terminal to the sending terminal using a GET method of an HTTP protocol with an optional RANGE field.

7. A method according to claim 1 **characterized in that** step g) comprises phases of terminating the old media stream after starting to play the new media stream and creating the new media stream before playing the new media stream.

8. A method according to claim 1 or 7, **characterized in that** step g) further comprises the phase of reading timing marks in the data source for defining the right point to start playing the new media stream.

9. A method according to claim 1 **characterized in that** step b) comprises the phase of reading a header field of files, where each contains one data source, the header indicating the starting points of the source and to which transmission speed rate the source is intended.

10. An arrangement for providing an adaptive media stream between a sending terminal and a user's terminal, **characterized in that** the adaptive media stream comprises at least one media stream and the arrangement comprises:
a) means in the sending terminal for choosing a transmission speed rate for the media stream,
b) a data structure in the sending terminal comprising at least two data sources containing essentially the same information, each source intended for a certain transmission speed rate,
c) means in the sending terminal for selecting a suitable data source from among the sources for the media stream,
d) means in the user's terminal for checking the suitability of the transmission speed rate when the media stream is played,
e) means in the user's terminal for reselecting a suitable data source from among the sources for a new media stream.

11. An arrangement according to claim 10, **characterized in that** the arrangement further comprises means for playing the data structure in a way that the playing is started from the right point of the data structure.

12. An arrangement according to claim 11, **characterized in that** means a) comprises means for reading a message from the user's terminal, which defines alternative transmission speed rates.

13. An arrangement according to claim 11, **characterized in that** each source comprises timing marks, which indicate the corresponding point in the other sources.

14. An arrangement according to claim 13, **characterized in that** the arrangement further comprises a GET method of an HTTP protocol with an optional RANGE field for transmitting the information of the reselection of the suitable data source from the user's terminal to the sending terminal.

15. An arrangement according to claim 11, **characterized in that** means d) comprises means for monitoring a filling degree of a buffer for incoming data in the user's terminal.

16. An arrangement according to claim 11, **characterized in that** the data structure is a file containing the data sources.

17. An arrangement according to claim 16, **characterized in that** means c) comprises means for reading a header of the data structure, which indicates the starting points of the sources and to which transmission speed rate each source is intended.

18. An arrangement according to claim 11, **characterized in that** the data structure is a number of files, each of them containing one data source.

19. An arrangement according to claim 18, **characterized in that** means c) comprises means for reading headers of the files, which indicate the starting point of the source and to which transmission speed rate the source is intended.
